(19) Europäisches Patentamt / European Patent Office / Office européen des brevets

(11) **EP 4 651 092 A2**

(12) **EUROPEAN PATENT APPLICATION**

(43) Date of publication:
**19.11.2025 Bulletin 2025/47**

(21) Application number: **25175698.7**

(22) Date of filing: **12.05.2025**

(51) International Patent Classification (IPC):
**G06T 17/30** (2006.01)     **G06T 19/00** (2011.01)
**G06F 30/20** (2020.01)

(52) Cooperative Patent Classification (CPC):
**G06T 17/30; G06F 30/20; G06T 19/00;**
G06T 2219/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.05.2024   US 202418663995**

(71) Applicant: **The Boeing Company**
**Arlington, VA 22202 (US)**

(72) Inventors:
• **Winfree, Troy**
**Arlington, 22202 (US)**
• **Lam, Ryan K.H.**
**Arlington, 22202 (US)**

(74) Representative: **Arnold & Siedsma**
**Bezuidenhoutseweg 57**
**2594 AC The Hague (NL)**

(54) **CURVE-WISE SURFACE FLATTENING FOR COMPOSITE LAYUP**

(57)     Methods of performing a curve-wise flattening to determine a two-dimensional ply shape are presented. Curves are traced on a first tensor product spline representing a three-dimensional part surface. The curves are reparameterized onto a parametric domain representative of a two-dimensional space. The curves are mapped to a second tensor product spline representing a flat table space while maintaining lengths of the curves between the first tensor product spline and the second tensor product spline in the curve-wise flattening to form a flattened shape, such that resulting table-space flattened curves are parallel straight lines in a desired fiber direction.

FIG. 4A

**Description**

**BACKGROUND INFORMATION**

**1. Field:**

The present disclosure relates generally to curve flattening and more specifically methods of curve flattening for composite manufacturing.

**2. Background:**

In aerospace composite design, a three-dimensional part is designed as a through-the-thickness build-up of layers, or plies, of composite material. Unidirectional plies of composite material each have a given fiber direction, ply shape, and position. The fiber direction can vary through-the-thickness so that the final part has the desired strength properties. The ply shape is also varied through-the-thickness.

In drape-formed composite manufacturing, each ply is cut out on a table and then formed to the three-dimensional part. Plies can be formed to the three-dimensional part either ply-by-ply or multiple plies at a time in a ply stack. The three-dimensional part is designed with the composite plies having desired shapes within the part. It is desirable to determine an initial shape for each composite ply on a flat cut-out table so that the initial shape will deform to the desired shape on the part. However, these determinations can be at least one of undesirably time-consuming or use an undesirable amount of resources.

Therefore, it would be desirable to have a method and apparatus that takes into account at least some of the issues discussed above, as well as other possible issues.

**SUMMARY**

An embodiment of the present disclosure provides a method, preferably a computer-implemented method, of performing a flattening, preferably a curve-wise flattening, to determine a two-dimensional ply shape. Curves are traced on a first tensor product spline representing a three-dimensional part surface. The curves are reparameterized onto a parametric domain representative of a two-dimensional space. The curves are flattened, or mapped, to a second tensor product spline representing a flat table space while maintaining lengths of the curves between the first tensor product spline and the second tensor product spline in the (preferably curve-wise) flattening to form a flattened shape, such that resulting table-space flattened curves are parallel straight lines in a desired fiber direction.

Tracing the curves may comprise at least one of isoparametric tracing, best fit plane isoparametric tracing, geodesic tracing, or offset tracing.

The method may further comprise drawing an index curve on the first tensor product spline prior to tracing the curves on the first tensor product spline, wherein the index curve intersects each of the curves; and defining index curve flattening for the index curve prior to mapping the curves to the second tensor product spline.

The index curve may define a location of a composite material that is fixed in a draping process of the composite material onto the three-dimensional part surface.

Tracing the curves may comprise tracing the curves relative to the index curve over the first tensor product spline.

The method may further comprise laying up a composite ply according to the flattened shape.

The method may further comprise applying a composite ply having the flattened shape onto an index line of a tool corresponding to the index curve on the three-dimensional part surface; and sweeping the composite ply to the tool. Sweeping the composite ply to the tool may comprise pressing the composite ply to the tool by sweeping outward from the index line.

Reparameterizing the curves onto the parametric domain representative of the two-dimensional space may comprise constructing a partial reparameterization map of the first tensor product spline whose isoparametric curves are the curves on the first tensor product spline, and mapping the curves to the second tensor product may comprise constructing a flattening map by unraveling the traced curves along parallel straight lines indexed by the index curve.

The desired fiber direction may be one of 0 degrees, 15 degrees, 30 degrees, 45 degrees, 60 degrees, 75 degrees, or 90 degrees.

Another embodiment of the present disclosure provides a method, preferably a computer-implemented method, of performing a flattening to determine a two-dimensional ply shape. An index curve is set on a parametric surface. A curve flattening of the index curve is constructed. Curves are traced on the parametric surface relative to the index curve to form traced curves. A reparameterization map, preferably a partial reparameterization map, of the parametric surface whose isoparametric curves are the traced curves on the parametric surface is constructed. A flattening map is constructed by unraveling the traced curves along parallel straight lines indexed by the index curve. Tracing curves on the parametric surface may comprise isoparametric tracing. The isoparametric tracing may comprise a best fit plane isoparametric flattening. The isoparametric tracing may be performed according to

$$S_F(u,v) = c_F\big(t(u)\big) + \big(\propto (u,v) - s(u)\big)\begin{bmatrix}\cos\big(\theta(u)\big)\\ \sin\big(\theta(u)\big)\end{bmatrix},$$

wherein

$S_F$ is the flattening map on a same parameter domain as parametric surface S, $c_F$ is the curve flattening of the index curve, T (or t) is a function from $u$ parameter of the surface that gives a location of an intersection of the isoparametric curve at u with the index curve, as a parameter point in a parameter space of $c_F$, S (or s) is a function from the u parameter of the parametric surface that gives arc length along the isoparametric curve at u at its intersection with the index curve, $\alpha$ (or $\propto$) is an arc length along the isoparametric curve at u at its $v$ parameter location, and $\theta$ is an angle between the isoparametric curve at $u$ and the index curve; wherein $S(u,v)$ is a parameterized surface, the index curve is a curve $c(t) = (u(t), v(t))$ into the parameter domain of S. Physical space coordinates are x,y,z, and flat table-space coordinates are $x_F, y_F$.

Tracing curves on the parametric surface may comprise geodesic tracing. The geodesic tracing may be performed according to:

$$S_F(u_F, v_F) = c_F(u_F) + v_F\begin{bmatrix}\cos(\theta(u_F))\\ \sin(\theta(u_F))\end{bmatrix},$$

wherein $S_F$ is the flattening map, $c_F$ is the curve flattening of the index curve, and $\theta$ is an angle between $c_F$ and a fixed direction in table space; and

wherein constructing the reparameterization map is performed according to:

$\tau(u_F, v_F) = \gamma_{u_F}(v_F)$, wherein $\tau$ is the reparameterization map from flat parameters $u_F$ and $v_F$ to surface parameters u and v, $u_F$ is the index curve, $\gamma_{u_F}$ is a surface parameter space map of the geodesic traced on the surface from the index curve at $u_F$ so that the geodesic is $S°\gamma_{u_F}$, and $v_F$: arc-length parameter of $\gamma_{u_F}$.

Tracing curves on the parametric surface may comprise offset tracing. The offset tracing may be performed using

$$S_F(u_F, v_F) = \mu_{v_F}(u_F^* + u_F),$$

wherein $S_F$ is the flattening map, $\mu_{v_F}$ is the arc-length parameterized $v_F$–offset of the curve flattening of the index curve in table-space, and $u_F^*$ is a fixed parameter location along the $v_F$–offset; and

wherein constructing the reparameterization map comprises:

$\tau(u_F, v_F) = \omega_{u_F}(u_F)$ wherein $\omega_{u_F}$ is a surface parameter space map of the offset tracing on a surface of an index map by a distance of $v_F$, $u_F$ is the arc length parameter of the surface offset at $v_F$.

The method may further comprise laying up a composite ply according to the flattening map. The method may further comprise applying the composite ply onto an index line of a tool corresponding to the index curve; and sweeping the composite ply to the tool.

The features and functions can be achieved independently in various embodiments of the present disclosure or may be combined in yet other embodiments in which further details can be seen with reference to the following description and drawings.

**BRIEF DESCRIPTION OF THE DRAWINGS**

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:

**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of representative steps in performing a flattening to determine a two-dimensional ply shape in accordance with an illustrative embodiment;

Figures 4A and 4B are a flowchart of a method of performing a flattening to determine a two-dimensional ply shape in accordance with an illustrative embodiment;

Figure 5 is a flowchart of a method of performing a flattening to determine a two-dimensional ply shape in accordance with an illustrative embodiment;

Figure 6 is an illustration of an aircraft manufacturing and service method in a form of a block diagram in accordance with an illustrative embodiment; and

Figure 7 is an illustration of an aircraft in a form of a block diagram in which an illustrative embodiment may be implemented.

## DETAILED DESCRIPTION

The illustrative examples recognize and take into account several considerations. The illustrative embodiments recognize and take into account that it is desirable to compute a shape on the ply cut-out table that will deform to a desired shape on the part. The illustrative embodiments recognize and take into account that computing a shape on the ply cut-out table is called ply "flat-patterning" or "flattening".

The illustrative embodiments recognize and take into account that flattening is a challenging problem. The illustrative embodiments recognize and take into account that unidirectional composite material does not stretch or compress along the fiber directions. The illustrative embodiments recognize and take into account that unidirectional composite material can shear parallel to the fibers and can stretch perpendicular to the fibers.

The illustrative embodiments recognize and take into account that Detailed Finite Element Analysis (FEA) tools that attempt to predict how a ply or stack-up of plies deform under a manufacturing process are undesirably lengthy. The illustrative embodiments recognize and take into account that Detailed Finite Element Analysis (FEA) tools that attempt to predict how a ply or stack-up of plies deform under a manufacturing process can be undesirably challenging.

The illustrative embodiments recognize and take into account that in computer graphics, a host of flattening (sometimes called parameterization) methods have been developed to map two-dimensional textures to three-dimensional models. The illustrative embodiments recognize and take into account that parameterization methods do not incorporate inextensibility conditions along fiber directions. The illustrative embodiments recognize and take into account that parameterization methods focus on producing approximately conformal maps with as little over-all distortion as possible.

The illustrative examples present "curve-wise" flattening methods that trace fiber directions on a part surface and map them to fiber lines on the ply cut-out table. The illustrative examples produce flattenings that do not allow compression or stretching in the fiber direction. The illustrative examples are geometric methods, and as a result are fast to run. The illustrative examples do not incorporate material physics. The speed of the illustrative examples allows the curve-wise flattenings to fit easily into a design iteration process.

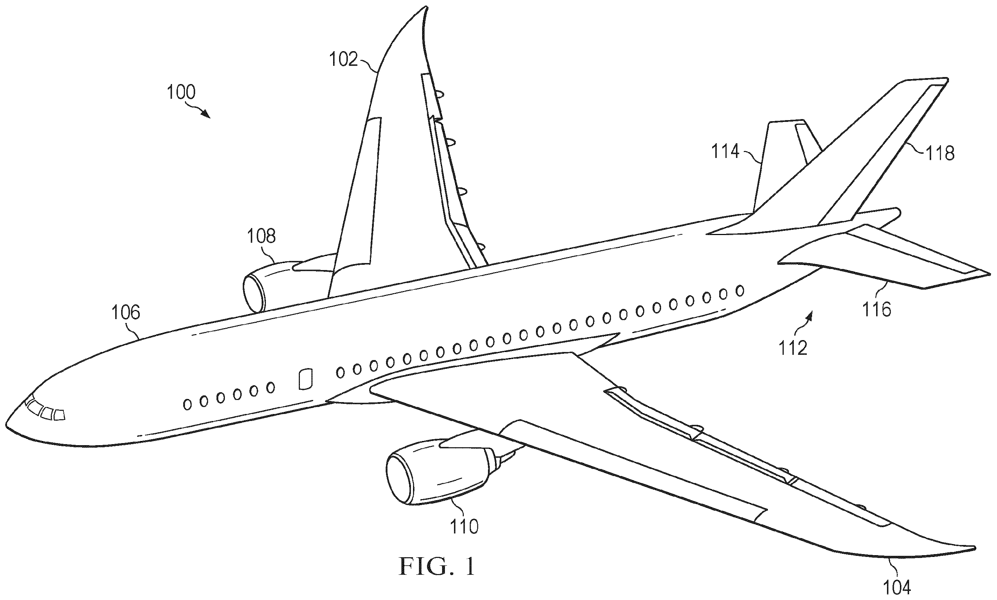

Turning now to Figure 1, an illustration of an aircraft is depicted in accordance with an illustrative embodiment. Aircraft 100 has wing 102 and wing 104 attached to body 106. Aircraft 100 includes engine 108 attached to wing 102 and engine 110 attached to wing 104.

Body 106 has tail section 112. Horizontal stabilizer 114, horizontal stabilizer 116, and vertical stabilizer 118 are attached to tail section 112 of body 106.

Aircraft 100 is an example of an aircraft that can be designed using the flattening methods of the illustrative examples. Any of wing 102, wing 104, body 106, or tail section 112 can be manufactured using composite plies designed using the illustrative examples.

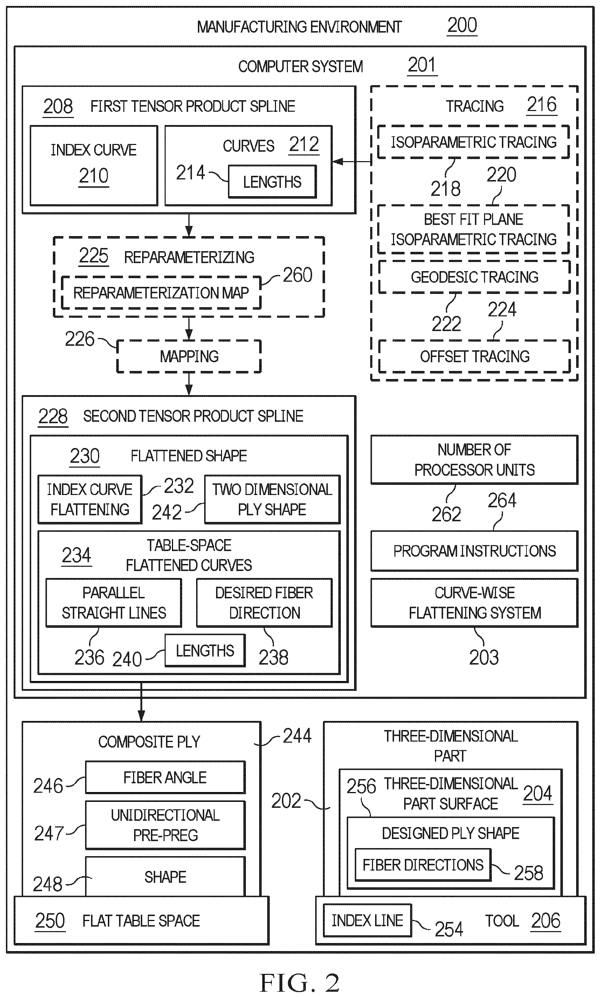

Turning now to Figure 2, an illustration of a block diagram of a manufacturing environment is depicted in accordance with an illustrative embodiment. In manufacturing environment 200, composite ply 244 with fiber angle 246 can be laid up on flat table space 250 as a stage in manufacturing three-dimensional part 202. Composite ply 244 is formed of unidirectional prepreg 247. Unidirectional prepreg 247 is a pre-impregnated composite material with unidirectional fibers that are inextensible. Shape 248 of composite ply 244 is distorted as composite ply 244 is applied to tool 206. Composite ply 244 can be either directly or indirectly applied to tool 206. In some illustrative examples, composite ply 244 is applied to a surface of tool 206 as a first composite ply on tool 206. In other illustrative examples, composite ply 244 is applied to tool 206 by applying composite ply 244 onto other composite plies of three-dimensional part 202 already present on tool 206. After sweeping composite ply 244 onto tool 206, composite ply 244 has designed ply shape 256. Shape 248 is set based on two-dimensional ply shape 242 determined in a curve-wise flattening. The curve-wise flattening can be performed by curve-wise flattening system 203 in computer system 201. Although computer system 201 is depicted as within manufacturing environment 200, in other illustrative examples, computer system 201 can be positioned outside of manufacturing environment 200.

The curve-wise flattening performed by curve-wise flattening system 203 comprises tracing 216, reparameterizing 225, and mapping 226. The curve-wise flattening is performed to determine two-dimensional ply shape 242. Two-dimensional ply shape **242** will produce a desired shape, designed ply shape **256,** when spread across tool **206** to form a ply in the lay-up of three-dimensional part **202**. To determine two-dimensional ply shape **242,** curves **212** are traced on first tensor product spline **208** representing three-dimensional part surface **204** in tracing **216**. Three-dimensional part surface **204** is representative of composite ply **244** with designed ply shape **256** within three-dimensional part **202**. Composite ply **244** is applied to tool **206** to form three-dimensional part surface **204**. Curves **212** are representative of fibers within composite ply **244** having designed ply shape **256** in three-dimensional part surface **204**.

Curves **212** are designed based on desired properties for three-dimensional part **202**. In some illustrative examples, fiber directions in three-dimensional part surface **204,** and thus curves **212** in first tensor product spline **208,** are designed for at least one of strength or stiffness properties of three-dimensional part **202**.

Curves **212** are flattened to second tensor product spline **228** representing flat table space **250** while maintaining lengths **214** of curves **212** in mapping **226** to form flattened shape **230,** such that resulting table-space flattened curves **234** are parallel straight lines **236** in desired fiber direction **238**. To perform the curve-wise flattening, reparameterizing **225** is performed to transition curves **212** from first tensor product spline **208** to second tensor product spline **228** using reparameterization map **260**.

In some illustrative examples, desired fiber direction **238** is one of 0 degrees, 15 degrees, 30 degrees, 45 degrees, 60 degrees, 75 degrees, or 90 degrees. Desired fiber direction **238** is a direction of laying up fibers of unidirectional prepreg **247**. By maintaining lengths **214** of curves **212**, lengths **240** of table-space flattened curves **234** are the same as lengths **214** of curves **212** of first tensor product spline **208**.

Tracing **216** curves **212** comprises at least one of isoparametric tracing **218,** best fit plane isoparametric tracing **220,** geodesic tracing **222,** or offset tracing **224**. Prior to tracing **216** curves **212** on first tensor product spline **208,** index curve **210** is traced on first tensor product spline **208**. In some illustrative examples, index curve **210** intersects each of curves **212**. In some other illustrative examples, index curve **210** does not intersect any of curves **212**. Prior to mapping **226** curves **212** to second tensor product spline **228,** index curve flattening **232** for index curve **210** is defined.

In some illustrative examples, index curve **210** defines a location of a composite material that is fixed in a draping process of the composite material onto tool **206** to form three-dimensional part surface **204**. In some illustrative examples, index curve **210** is the initial placement and sweeping location for composite ply **244** on tool **206**. Index curve **210** may also be referred to as a fixed line, a clamp line, or a fixed initial position. In some illustrative examples, tracing **216** curves **212** comprises tracing **216** curves **212** relative to index curve **210** over first tensor product spline **208**.

Mapping **226** can be performed using any desirable methods to determine two-dimensional ply shape **242**. Reparameterization map **260** of first tensor product spline **208** is constructed whose isoparametric curves are curves **212** on the first tensor product spline **208**. In some illustrative examples, wherein mapping **226** curves **212** to second tensor product spline **228** comprises constructing a flattening map by unraveling traced curves **212** along parallel straight lines indexed by index curve **210**.

To manufacture a structure, composite ply **244** is laid up according to flattened shape **230**. Afterwards, composite ply **244** having flattened shape **230** is applied onto index line **254** of tool **206** corresponding to index curve **210** on three-dimensional part surface **204**. Composite ply **244** is then swept to tool **206**. In some illustrative examples, sweeping composite ply **244** to tool **206** comprises pressing composite ply **244** to tool **206** by sweeping outward from index line **254**.

Curve-wise flattenings work by tracing curves on a part surface and using a rule to flatten the curves to two-dimensional table-space. In these illustrative examples, tracing **216** is performed to generate curves **212**, reparameterizing **225** transitions curves **212** between a three-dimensional parametric domain and a two-dimensional parametric domain.

Table-space flattened curves **234** are parallel straight lines **236** in desired fiber direction **238**. The inextensibility of composite fibers is modeled by ensuring that the three-dimensional-to-two-dimensional curve mappings preserve lengths **240**. A collection of part surface curves can present two questions: which two-dimensional straight line does a given three-dimensional curve get mapped to, and where along the straight line in two-dimensional should the three-dimensional curve be "unraveled" from? These questions are answered by index curve **210,** whose flattening is known and which intersects all three-dimensional traced curves, curves **212**. In some illustrative examples, index curve **210** is defined first together with index curve flattening **232,** then curves **212** are traced from or relative to index curve **210** in first tensor product spline **208**. In some illustrative examples, index curve **210** defines a location on the material that is fixed in the composite draping process.

In this document three-dimensional part surface **204** is a parametric surface $S(u,v)$ and index curve **210** is a curve $c(t) = (u(t), v(t))$ into the parameter domain of $S$. Physical space coordinates are x,y,z, and flat table-space coordinates are $x_F, y_F$. To enable use of the CAD modeling software, the tensor product splines are used to represent parametric surface geometry and flattened regions in table-space. The parametric domain of tensor product splines is rectangular. Therefore, a two-dimensional to three-dimensional ply shape deformation can be modeled as a pair of tensor product splines, one representing the part surface, first tensor product spline **208,** and a second representing the flat region in table-space, second tensor product spline **228**. In curve-wise flattening the deformation additionally includes reparameterizing **225,** which transitions curves **212** from the parameter domain of first tensor product spline **208,** to the parameter domain of second tensor product spline **228**. Reparameterizing **225** and second tensor product spline **228** share the same parametric domain. The additional spline function, reparameterizing **225,** reparametrizes the subregion covered by curves **212** on the part surface; the subregion is the region that is flattened.

Curves on the surface are produced relative to the index curve Soc using a tracing rule. There are many possible tracing rules. There are many ways to construct a curve-wise flattening of Soc. One approach is to flatten by arc-length along a straight line. Specifically, let s be the arc length parameter of $S \circ c$ and let $\boldsymbol{p}$ be a point and $\boldsymbol{v}$ a direction, both in flat table-space. Then the unraveling by arc length along the straight line given by $\boldsymbol{p}$ and $\boldsymbol{v}$ is just: $c_F(s) = \boldsymbol{p} + s\boldsymbol{v}$.

Another choice is to integrate the curvature of $S \circ c$. We take $c_F(s) = [x_F(s), y_F(s)]$ and note that $x'_F = \cos\theta$ and $y'_F = \sin\theta$ where $\theta(s)$ is a function giving the angle of the tangent vector to $c_F$ at s. The derivative of $\theta(s)$ is the curvature of $c_F$. So, if we want to compute $c_F$ to match the curvature (or geodesic curvature) of Soc then we just need to solve the

$$\frac{d}{ds}\begin{bmatrix}\theta \\ x_F \\ y_F\end{bmatrix} = \begin{bmatrix}\kappa \\ \cos\theta \\ \sin\theta\end{bmatrix}$$

system of differential equations , where $\kappa$ is the known curvature function of $S \circ c$.

Since S is a parameterized surface there two natural sets of curves on S: the isoparametric curves. Isoparametric curves are the curves on S that lie along constant $u$ or $v$ parameters. Without loss of generality we can focus on the constant along u case. Consider the set of isoparametric curves that intersect the index curve So $c$. We assume that c has been chosen so that each isoparametric curve in the set intersects Soc exactly once. Since we are working with isoparametric curves along fixed u parameters, each curve in our set corresponds to a u parameter, let $u_m$ be the minimum such parameter and $u_M$ the maximum. Let $\gamma_u$ be the isoparametric curve at the fixed $u$ parameter of $S$. Let $t(u)$ be the function that maps a u parameter of S to the parameter value of $c_F$ corresponding to the intersection of c with $\gamma_u$. Note that the domain of $t$ $(u)$ is $[u_m, u_M]$. Let $s(u)$ be the function that maps a parameter point of S to the arc length parameter of $\gamma_u$ corresponding to its intersection with $c$. Finally, let $\alpha(u,v)$ be the arc length of $\gamma_u$ on $[0,v]$, and let $\theta(u)$ be the angle between $\gamma_u$ and $S \circ c$ at their intersection. Then $\tau$ is just the identity map on the restricted parametric rectangle $J = [u_m, n_M] \times [0,1]$.

For isoparametric tracing **218**, tracing **216** can be performed without a separate reparameterizing **225**. Because the below equation for isoparametric tracing **218** is the identity, there is no tau equation for reparameterizing **225.** In some illustrative examples, isoparametric tracing **218** can be performed according to:

$$S_F(u,v) = c_F\big(t(u)\big) + \big(\propto(u,v) - s(u)\big)\begin{bmatrix}\cos(\theta(u)) \\ \sin(\theta(u))\end{bmatrix}S_F$$

is the flattening map on a same parameter domain as the parametric surface S, $c_F$ is the curve flattening of the index curve, T is a function from the $u$ parameter of the surface that gives a location of an intersection of the isoparametric curve at u with the index curve, as a parameter point in a parameter space of $c_F$, S is a function from the u parameter of the parametric surface that gives arc length along the isoparametric curve at u at its intersection with the index curve, $\alpha$ is an arc length along the isoparametric curve at u at its $v$ parameter location, and $\theta$ is the angle between the isoparametric curve at u and the index curve; wherein $S(u,v)$ is a parameterized surface, the index curve is a curve $c(t) = (u(t),v(t))$ into the parameter domain of $S$. Physical space coordinates are x,y,z, and flat table-space coordinates are $x_F, y_F$. Note that in this case $u_F, v_F = u,v$.

For best fit plane isoparametric tracing **220**, a variation of the above equations can use S's best fit plane to define flat table-space. In this case, $c_F$ is the projection of c to the best fit plane and $\theta(u)$ can be taken to be the angle between $c_F$ and the projection of $\gamma_u$ in the best fit plane. In both cases it is possible to produce flattened isoparametric curves that intersect in table-space, however, this is undesirable since that leads to a non-invertible flattening map $S_F$.

As another method of tracing **216,** geodesic tracing **222** can be used. In this approach, the method shoots geodesics from the index curve Soc. Geodesics are minimal energy curves on a surface that can be computed by integrating an initial value problem. In these illustrative examples, for geodesic tracing **222,** composite fiber paths are modeled on the surface with geodesics, which can be generalized to allowing the fibers to go where the surface wants them to go (in a minimal energy sense). Geodesic tracing **222** will provide guidance. Unidirectional composite material can be made up of long composite fibers in a matrix of epoxy which does restrict movement of the fibers in the perpendicular and shear directions, preventing the fibers from following geodesic paths in practice. Nonetheless, using geodesics to model the fibers shows where the fibers "want" to go, which can provide useful manufacturability insight. Additionally, with less curvature in the plies, fibers can approximately follow geodesic paths. Note that geodesics can intersect which is undesirable since that leads to a non-invertible reparameterization map $\tau$. If $\tau$ is not invertible, then ply shapes cannot be flat patterned through the flattening map.

Directions along the index curve Soc are defined to shoot geodesics. Because fiber directions which are at fixed angles in flat table-space are being modeled, one approach is to use the angle formed between the flattened index curve $c_F$ and a given fixed table-space direction. Some standard table-space directions in composite manufacturing are 0°, ±45°, and 90°. Let $u_F$ be the shared parameter of c and $c_F$ and let $\theta(u_F)$ be the function giving the angle between the tangent direction of $c_F$ at $u_F$ and a fixed table-space direction. So that geodesics are not traced along the same direction as the index curve, we assume that $\theta(u_F)$ never equals zero. Let $g_{u_F}$ bet the geodesic on S with start point $c(u_F)$ and start direction $\theta(u_F)$, relative to the tangent direction of c at $u_F$ and the surface normal. We take $g_{u_F}$ to be the geodesic in both the positive and negative directions. Since $g_{u_F}$ is a curve on the parameterized surface S, there is a parameter space map $\gamma_{u_F}$ such that $g_{u_F} = S \circ \gamma_{u_F}$. Finally, let $v_F$ be the arc length parameter along $g_{u_F}$. We take $v_F$ to be positive for the geodesic trace in the positive direction and negative for the trace in the negative direction.

In geodesic tracing **222**, there is a reparameterization map that defines flat parameters $u_F$ and $v_F$. For geodesic tracing **222**, reparameterizing **225** is defined by:

$$\tau(u_F, v_F) = \gamma_{u_F}(v_F)$$

Wherein $\tau$: is reparameterization map **260** from flat parameters $u_F$ and $v_F$ to the surface parameters $u$ and $v$. $u_F$: is the parameter of index curve **210** and index curve flattening **232**, $c_F$. $\gamma_{u_F}$ is the surface parameter space map of the geodesic traced on the surface from index curve **210** at $u_F$ (so the geodesic is $S°_{u_F}$). $v_F$ is the arc-length parameter of $\gamma_{u_F}$.

In these illustrative examples, the surface flattening map, mapping **226**, is defined by

$$S_F(u_F, v_F) = c_F(u_F) + v_F \begin{bmatrix} \cos(\theta(u_F)) \\ \sin(\theta(u_F)) \end{bmatrix}$$

wherein $S_F$ is the flattening map, mapping **226**, for geodesic tracing **222**. In this illustrative example, $S_F$ is defined on the reparameterization of the parameter domain of the surface S given by $\tau$. $c_F$ is index curve flattening **232** of the index curve **210**. $\theta$ is an angle between $c_F$ and a fixed direction in table space (typically 0°, ±45°, or 90°)

In some illustrative examples, $c_F$ is a straight line in table space parallel to one of the fiber directions. When $c_F$ is a straight line in table space parallel to one of the fiber directions, it's not possible to trace geodesics in the aligned fiber direction. Instead of using geodesics in these illustrative examples, offset tracing **224** can be performed. In some of these illustrative examples, instead of using geodesics offset curves of Soc can be used on the surface to represent fiber paths and flatten those. Surface offsets are expensive to compute but can be approximated by evaluating fixed length (the offset length) points along geodesics perpendicular to the index curve.

Let $w_{v_F} = S \circ \omega_{v_F}$ be the offset of $S \circ c$ by distance $v_F$. As before we are allowing $v_F$ to be positive or negative, corresponding to offsets above or below the index curve relative to the tangent and curve normal directions. So $w_{v_F}$ will be mapped to offsets of $c_F$ in flat table-space in a way that preserves arc length. Note that $w_{v_F}$ can be shorter or longer than Soc, depending on the shape of S and the location of c. The possible ways to unravel $w_{v_F}$ along an offset are parameterized by the location along the table-space offset that the point $w_{v_F}(0)$ is mapped to, since once that location is known it only remains to trace along the table space offset to the arc length of $w_{v_F}$. To choose these points we set up an optimization problem on a discretized version of the problem. Before moving on to a discussion of the optimization problem, note that if $u_F$ is the arc length parameter of $w_{v_F}$ then the reparameterization map **260** for offset tracing **224** is:

$$\tau(u_F, v_F) = \omega_{v_F}(u_F).$$

Wherein $\omega v_F$ is the surface parameter space map of the offset on the surface of the index map by a distance of $v_F$. $u_F$ is the arc length parameter of the surface offset at $v_F$. Furthermore if $\mu_{v_F}$ is the arc length parameterized $v_F$-offset of $c_F$ in flat table-space and flattening parameter locations are fixed $\{u_F^*\}$ for $w_{v_F}(0)$ then the mapping **226** is

$$S_F(u_F, v_F) = \mu_{v_F}(u_F^* + u_F).$$

wherein $S_F$ is the flattening map, $\mu_{v_F}$ is a arc-length parameterized $v_F$-offset of $c_F$ in table-space, and $u_F^*$ is a fixed parameter location along the $v_F$-offset. Moving on to the optimization to compute $\{u_F^*\}$, fix a set $\{v_i\}$ of sorted non-zero (though possibly negative) offset distances. Also fix a set $\{u_{0j}\}$ of sorted values in the shared parameter space of c and $c_F$. The perpendicular geodesics at $\{u_{0j}\}$ form a non-linear grid on S. Let $u_{ij}$ be the arc-length parameter location for the offset $w_{v_i}$ of its intersection with the j-th geodesic. Finally, let $v_n$ be the largest negative offset value. The optimization objective function is formed from three parts:

$$\Sigma_0(u_0, \ldots, \hat{u}_n, \ldots, u_m) = \sum_{\substack{i \neq n \\ j}} \frac{\langle \mu_{v_{i+1}}(u_{i+1} + u_{i+1j}) - \mu_{v_i}(u_i + u_{ij}), \mu'_{v_i}(u_i + u_{ij}) \rangle}{v_{i+1} - v_i}$$

$$\Sigma_1(u_n) = \sum_j \frac{\langle c_F(u_{0j}) - \mu_{v_n}(u_n + u_{nj}), \mu'_{v_n}(u_n + u_{nj}) \rangle}{-v_n}$$

$$\Sigma_2(u_{n+1}) = \sum_j \frac{\langle \mu_{v_{n+1}}(u_{n+1} + u_{n+1j}) - c_F(u_{0j}), c'_F(u_{0j}) \rangle}{v_{n+1}}$$

Each part has the same form: we are asking that the locations on adjacent offsets be aligned as much as possible along the perpendicular directions to the offset curves. $\Sigma_1$ and $\Sigma_2$ are dealt with separately because of the special notational status of $c_F$. The variables are $\{u_i\}$: they determine where along table-space offset curves the physical space curves are unraveled from. Because these summands only deal with alignment along perpendicular directions, it's possible for the distance between points on adjacent table-space offsets to be quite large. The illustrative examples can add additional terms to balance physical space distance as well if desired. The simple unconstrained optimization problem is:

$$\min_{u_i} \Sigma_0 + \Sigma_1 + \Sigma_2 .$$

Let $\{u_i^*\}$ be a solution to the optimization problem, then the illustrative examples can use the samples

$$\left\{ S_F(u_{ij}, v_i) = \mu_{v_F}(u_i^* + u_{ij}) \right\}_{i,j}$$ to fit an approximation to $S_F$.

In this depicted example, curve-wise flattening system **203** is located in computer system **201** and can be implemented in software, hardware, firmware, or a combination thereof. When software is used, the operations performed by curve-wise flattening system **203** can be implemented in program instructions configured to run on hardware, such as a processor unit. When firmware is used, the operations performed by curve-wise flattening system **203** can be implemented in program instructions and data stored in persistent memory to run on a processor unit. When hardware is employed, the hardware can include circuits that operate to perform the operations in curve-wise flattening system **203.**

In the illustrative examples, the hardware can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices.

Computer system **201** is a physical hardware system and includes one or more data processing systems. When more than one data processing system is present in computer system **201,** those data processing systems are in communication with each other using a communications medium. The communications medium can be a network. The data processing systems can be selected from at least one of a computer, a server computer, a tablet computer, or some other suitable data processing system.

As depicted, computer system **201** includes a number of processor units **262** that are capable of executing program instructions **264** implementing processes for curve-wise flattening system **203** in the illustrative examples. In other words, program instructions **264** are computer-readable program instructions.

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

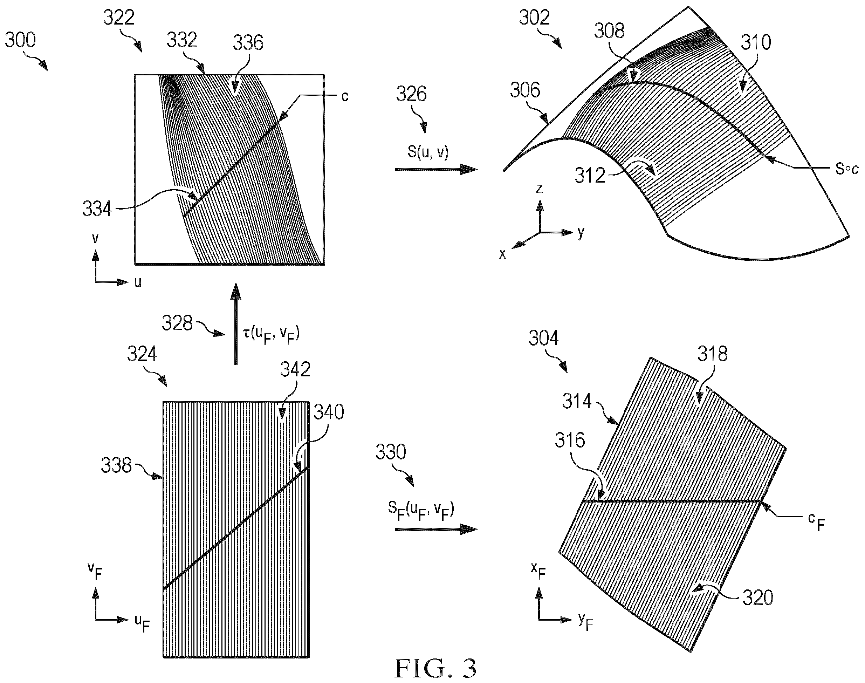

Turning now to **Figure 3,** an illustration of representative steps in performing a flattening to determine a two-dimensional ply shape is depicted in accordance with an illustrative embodiment. View **300** is an illustration of a part surface and a two-dimensional ply shape and curve-wise flattening between. In view **300,** three-dimensional part surface **302** is an example of three-dimensional part surface **204** of Figure **2.** Three-dimensional part surface **302** has designed ply shape **306.** Index curve **308** extends across part surface **302** and intersects each of curves **310.** Curves **310** have lengths **312.**

The curve-wise flattening is performed by tracing using first tensor product spline **326,** reparameterization **328,** and mapping using second tensor product spline **330.**

Tracing using first tensor product spline **326** is representative of tracing **216** of **Figure 2.** In this illustrative example, arrows in **Figure 3** are representative of spline maps. A collection of curves on the part surface are produced whose image in the parametric domain of the part surface form the image of the reparameterization map, τ. The parametric domain of reparameterization **328,** τ, is also the parametric domain of the flattening map, second tensor product spline **330,** $S_F$.

As depicted, three-dimensional part surface **302** is a parametric surface $S(u,v)$ and index curve **308** is a curve $c(t) = (u(t),v(t))$ into the parameter domain of $S$. Physical space coordinates are $x,y,z$, and flat table-space coordinates are $x_F, y_F$.

Three-dimensional part surface **302** is only representative of the resulting three-dimensional layer created in a structure. Designed ply shape **306** is set and curves **310** are traced based on desired ply properties.

Flattened shape **304** is a result of the curve-wise flattening. Flattened shape **304** is representative of an output of the curve-wise flattening process. Flattened shape **304** comprises two-dimensional ply shape **314** with index curve flattening **316** and table-space flattened curves **318** that are parallel straight lines with desired fiber direction and lengths **320.**

Parametric domain **322** is representative of the three-dimensional parametric domain of three-dimensional part surface **302.** Parametric domain **322** is rectangular. In this illustrative example, index curve **334** intersects curves **332** with lengths **336.** Parametric domain **322** is representative of the parametric domain of first tensor product spline **326.** In this illustrative example, lengths **312** are the same as lengths **320.** Lengths of fibers are maintained between three-dimensional part surface **302** and flattened shape **304** by the curve-wise flattening utilizing tracing using first tensor product spline **326,** reparameterization **328,** and mapping using second tensor product spline **330.**

Parametric domain **324** is representative of the two-dimensional parametric domain of flattened shape **304.** Parametric domain **324** is rectangular. In this illustrative example, index curve **340** intersects curves **338** with lengths **342.** Parametric domain **324** is representative of the parametric domain of second tensor product spline **330.** To move between parametric domain **322** and parametric domain **324,** reparameterization **328** uses a partial reparameterization map to unravel traced curves **332** along parallel straight lines indexed by index curve **334.**

Second tensor product spline **330** transforms traced curves **338** in parametric domain **324** by aligning them with a fixed fiber direction in flattened shape **304** and matching lengths with physical space traced curves **310.**

In some illustrative examples, the curve-wise flattening can be performed using CAD modeling software. To enable use of the CAD modeling software, the tensor product splines are used to represent parametric surface geometry and flattened regions in table-space.

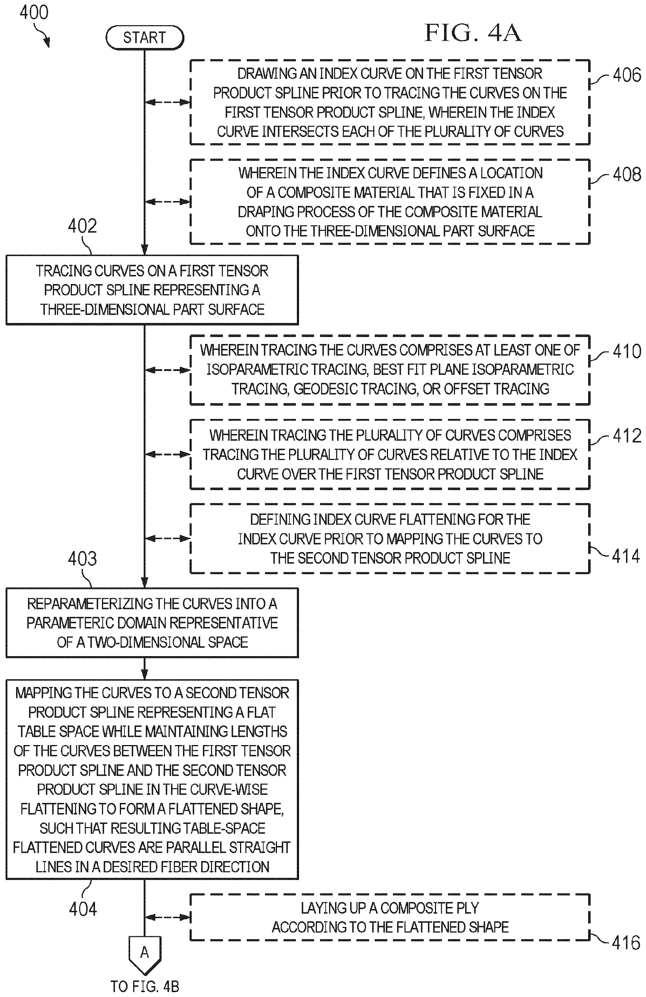

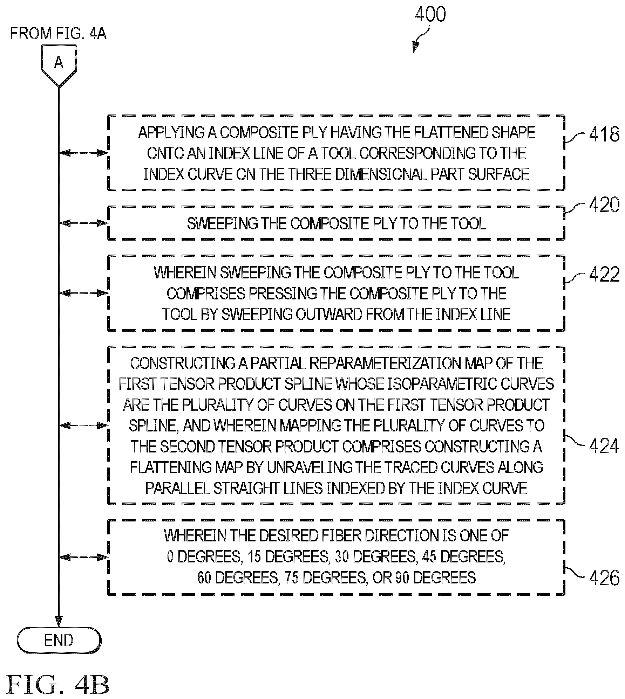

Turning now to **Figures 4A** and **4B,** a flowchart of a method of performing a flattening to determine a two-dimensional ply shape is depicted in accordance with an illustrative embodiment. Some operations of method **400** can be implemented in hardware, software, or both. When implemented in software, the respective operation can take the form of program instructions that are run by one of more processor units located in one or more hardware devices in one or more computer systems. Method **400** can be performed to determine two-dimensional ply shape **242** of Figure **2.** In some illustrative examples, method **400** is a method of performing a flattening as in view **300** of Figure **3.**

Method **400** traces a curves on a first tensor product spline representing a three-dimensional part surface (operation **402**). Method **400** reparameterizes the curves into a parametric domain representative of a two-dimensional space (operation **403**). Method **400** maps the curves to a second tensor product spline representing a flat table space while maintaining lengths of the curves between the first tensor product spline and the second tensor product spline in the curve-wise flattening to form a flattened shape, such that resulting table-space flattened curves are parallel straight lines in a desired fiber direction (operation **404**). Afterwards, method **400** terminates.

In some illustrative examples, method **400** draws an index curve on the first tensor product spline prior to tracing the curves on the first tensor product spline, wherein the index curve intersects each of the curves (operation **406**). In some illustrative examples, the index curve defines a location of a composite material that is fixed in a draping process of the composite material onto a three-dimensional part surface. In some illustrative examples, the index curve is the initial placement and sweeping location for composite ply on the tool. The index curve may also be referred to as a fixed line, a clamp line, or a fixed initial position.

In some illustrative examples, the index curve defines a location of a composite material that is fixed in a draping process of the composite material onto the three-dimensional part surface (operation **408**). In some illustrative examples, tracing the curves comprises at least one of isoparametric tracing, best fit plane isoparametric tracing, geodesic tracing, or offset tracing (operation **410**).

In some illustrative examples, tracing the curves comprises tracing the curves relative to the index curve over the first tensor product spline (operation **412**). In some illustrative examples, method **400** defines index curve flattening for the index curve prior to mapping the curves to the second tensor product spline (operation **414**).

In some illustrative examples, method **400** lays up a composite ply according to the flattened shape (operation **416**). In these illustrative examples, the composite ply is laid up as a unidirectional pre-preg ply with a fiber angle that corresponds to the desired fiber direction in the table-space flattened curves.

In some illustrative examples, method **400** applies a composite ply having the flattened shape onto an index line of a tool corresponding to the index curve on the three-dimensional part surface (operation **418**). In some illustrative examples, method **400** sweeps the composite ply to the tool (operation **420**). In some illustrative examples, sweeping the composite ply to the tool comprises pressing the composite ply to the tool by sweeping outward from the index line (operation **422**).

In some illustrative examples, method **400** constructs a partial reparameterization map of the first tensor product spline whose isoparametric curves are the curves on the first tensor product spline, and wherein mapping the curves to the second tensor product comprises constructing a flattening map by unraveling the traced curves along parallel straight lines indexed by the index curve (operation **424**).

In some illustrative examples, the desired fiber direction is one of 0 degrees, 15 degrees, 30 degrees, 45 degrees, 60 degrees, 75 degrees, or 90 degrees (operation **426**). The desired fiber direction can be any designed fiber direction for composite manufacturing.

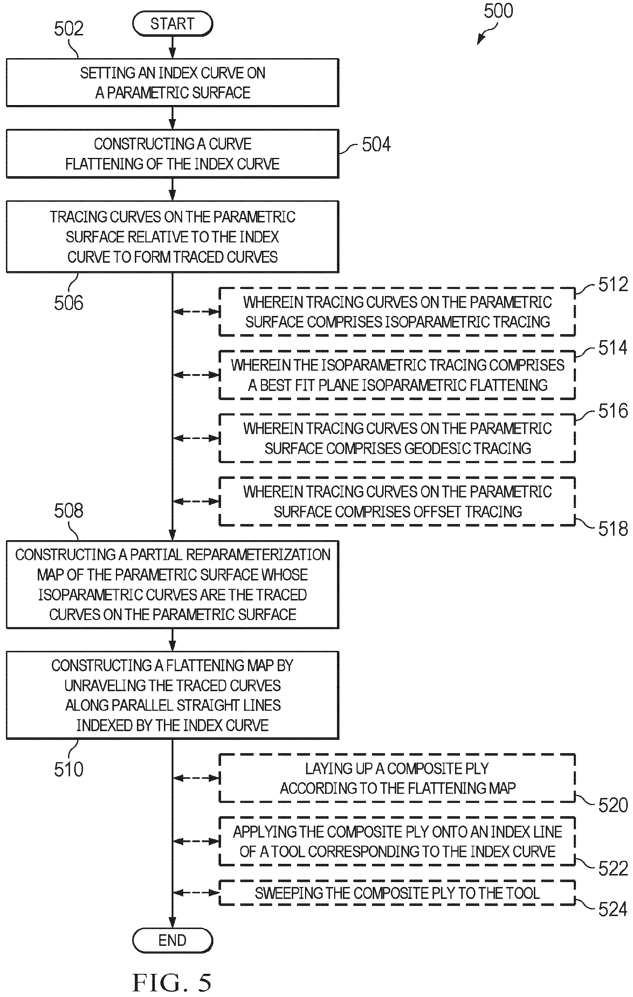

Turning now to **Figure 5** is a flowchart of a method of performing a flattening to determine a two-dimensional ply shape is depicted in accordance with an illustrative embodiment. Some operations of method **500** can be implemented in hardware, software, or both. When implemented in software, the respective operation can take the form of program instructions that are run by one of more processor units located in one or more hardware devices in one or more computer systems. Method **500** can be performed to determine two-dimensional ply shape **242** of Figure **2**. In some illustrative examples, method **500** is a method of performing a flattening as in view **300** of Figure **3**.

Method **500** sets an index curve on a parametric surface (operation **502**). Method **500** constructs a curve flattening of the index curve (operation **504**). Method **500** traces curves on the parametric surface relative to the index curve to form traced curves (operation **506**). Method **500** constructs a partial reparameterization map of the parametric surface whose isoparametric curves are the traced curves on the parametric surface (operation **508**). Method **500** constructs a flattening map by unraveling the traced curves along parallel straight lines indexed by the index curve (operation **510**). Afterwards, method **500** terminates.

In some illustrative examples, tracing curves on the parametric surface comprises isoparametric tracing (operation **512**). In the isoparametric tracing, the distances are preserved along the traced curves due to the inextensible nature of the composite fibers. In the isoparametric tracing, the distances in other non-fiber directions are not preserved. In some illustrative examples, the isoparametric tracing is performed according to

$$S_F(u,v) = c_F\big(t(u)\big) + \big(\propto (u,v) - s(u)\big) \begin{bmatrix} \cos\big(\theta(u)\big) \\ \sin\big(\theta(u)\big) \end{bmatrix},$$

wherein

$S_F$ is the flattening map on a same parameter domain as the parametric surface $S$, $c_F$ is the curve flattening of the index curve, T is a function from the $u$ parameter of the surface that gives a location of an intersection of the isoparametric curve at u with the index curve, as a parameter point in a parameter space of $c_F$, S is a function from the u parameter of the parametric surface that gives arc length along the isoparametric curve at u at its intersection with the index curve, $\alpha$ is an arc length along the isoparametric curve at $u$ at its $v$ parameter location, and $\theta$ is the angle between the isoparametric curve at $u$ and the index curve; wherein $S(u,v)$ is a parameterized surface, the index curve is a curve $c(t)$ = $(u(t),v(t))$ into the parameter domain of S. Physical space coordinates are x,y,z, and flat table-space coordinates are $x_F,y_F$.

In some illustrative examples, the isoparametric tracing comprises a best fit plane isoparametric flattening (operation **514**). In some illustrative examples, tracing curves on the parametric surface comprises geodesic tracing (operation **516**). In some illustrative examples, the geodesic tracing is performed according to:

$$S_F(u_F,v_F) = c_F(u_F) + v_F \begin{bmatrix} \cos(\theta(u_F)) \\ \sin(\theta(u_F)) \end{bmatrix},$$

wherein $S_F$ is the flattening map, $c_F$ is the curve flattening of the index curve, and $\theta$ is an angle between $c_F$ and a fixed direction in table space; and

wherein constructing the reparameterization map is performed according to:

$$\tau(u_F, v_F) = \gamma_{u_F}(v_F),$$

wherein

T is the reparameterization map from flat parameters $u_F$ and $v_F$ to surface parameters $u$ and $v$, $u_F$ is the index curve, $\gamma_{uF}$ is a surface parameter space map of the geodesic traced on the surface from the index curve at $u_F$ so that the geodesic is $S \circ \gamma_{uF}$, and $v_F$: arc-length parameter of $\gamma_{uF}$.

In some illustrative examples, tracing curves on the parametric surface comprises offset tracing (operation **518**). In some illustrative examples, the offset tracing is performed using:

$$S_F(u_F, v_F) = \mu_{v_F}(u_F^* + u_F),$$

wherein $S_F$ is the flattening map, $\mu_{v_F}$ is the arc-length parameterized $v_F$-offset of the flattened index curve in table-space, and $u_F^*$ is a fixed parameter location along the $v_F$-offset; and wherein constructing the reparameterization map comprises:

$$\tau(u_F, v_F) = \omega_{u_F}(u_F)$$

wherein $\omega_{uF}$ is the surface parameter space map of the offset tracing on a surface of an index map by a distance of $v_F$, $u_F$ is the arc length parameter of the surface offset at $v_F$.

In some illustrative examples, method **500** lays up a composite ply according to the flattening map (operation **520**). In some illustrative examples, method **500** applies the composite ply onto an index line of a tool corresponding to the index curve (operation **522**). In some illustrative examples, method **500** sweeps the composite ply to the tool (operation **524).**

As used herein, the phrase "at least one of," when used with a list of items, means different combinations of one or more of the listed items may be used and only one of each item in the list may be needed. For example, "at least one of item A, item B, or item C," may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **406** through operation **426** may be optional. As another example, operation **512** through operation **524** may be optional.

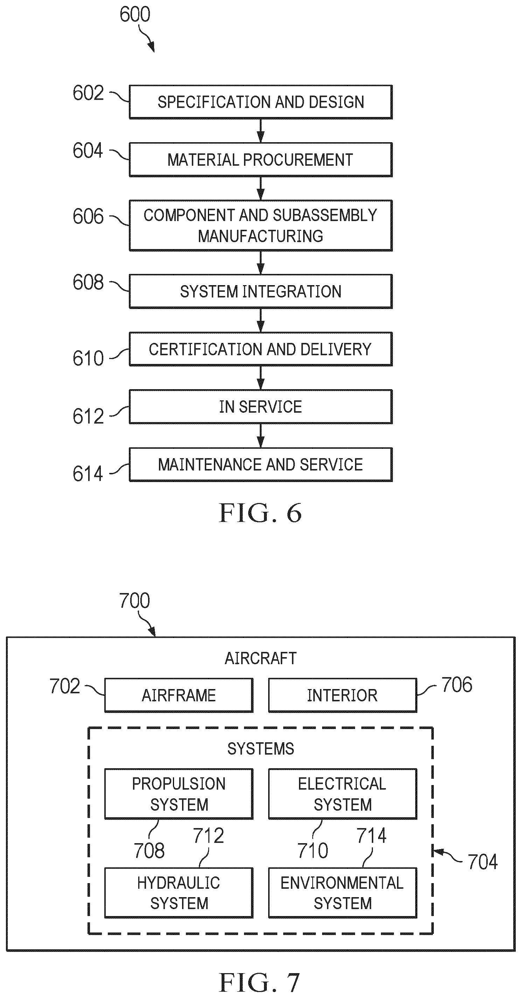

Illustrative embodiments of the present disclosure may be described in the context of aircraft manufacturing and service method **600** as shown in **Figure 6** and aircraft **700** as shown in **Figure 7.** Turning first to **Figure 6,** an illustration of an aircraft manufacturing and service method in a form of a block diagram is depicted in accordance with an illustrative embodiment. During pre-production, aircraft manufacturing and service method **600** may include specification and design **602** of aircraft **700** in **Figure 7** and material procurement **604.**

During production, component and subassembly manufacturing **606** and system integration **608** of aircraft **700** takes place. Thereafter, aircraft **700** may go through certification and delivery **610** in order to be placed in service **612**. While in service **612** by a customer, aircraft **700** is scheduled for routine maintenance and service **614,** which may include modification, reconfiguration, refurbishment, or other maintenance and service.

Each of the processes of aircraft manufacturing and service method **600** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 7,** an illustration of an aircraft in a form of a block diagram is depicted in which an illustrative embodiment may be implemented. In this example, aircraft **700** is produced by aircraft manufacturing and service method **600** of **Figure 6** and may include airframe **702** with plurality of systems **704** and interior **706.** Examples of systems **704** include one or more of propulsion system **708,** electrical system **710,** hydraulic system **712,** and environmental system **714.** Any number of other systems may be included.

Apparatuses and methods embodied herein may be employed during at least one of the stages of aircraft manufacturing and service method **600.** One or more illustrative embodiments may be manufactured or used during at least one of component and subassembly manufacturing **606,** system integration **608,** in service **612,** or maintenance and service **614** of **Figure 6.**

The illustrative examples provide faster and easier curve flattenings compared to Finite Element Modeling (FEM) or physics-based methods. The illustrative examples provide flattenings using only geometric based decisions. Triangulated meshes are unable to provide flattenings for composite plies as the triangulated meshes do not account for fiber direction. The illustrative examples provide flattenings that account for fiber direction. The illustrative examples operate based on parametric geometry. The flattening of the illustrative examples is built on parametric shapes based on design geometry.

In the illustrative examples, the fiber directions are traced on a three-dimensional surface representing the part surface and then a rule is implemented on how to flatten the fiber directions along with the other fiber directions in the layer.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

The disclosure further comprises the following clauses:

1. A method of performing a curve-wise flattening to determine a two-dimensional ply shape, the method comprising:

tracing curves on a first tensor product spline representing a three-dimensional part surface;
reparameterizing the curves onto a parametric domain representative of a two-dimensional space; and
mapping the curves to a second tensor product spline representing a flat table space while maintaining lengths of the curves between the first tensor product spline and the second tensor product spline in the curve-wise flattening to form a flattened shape, such that resulting table-space flattened curves are parallel straight lines in a desired fiber direction.

2. The method of clause 1, wherein tracing the curves comprises at least one of isoparametric tracing, best fit plane isoparametric tracing, geodesic tracing, or offset tracing.

3. The method of clause 1 or 2, further comprising:

drawing an index curve on the first tensor product spline prior to tracing the curves on the first tensor product spline, wherein the index curve intersects each of the curves; and
defining index curve flattening for the index curve prior to mapping the curves to the second tensor product spline.

4. The method of clause 3, wherein the index curve defines a location of a composite material that is fixed in a draping process of the composite material onto the three-dimensional part surface.

5. The method of clause 3 or 4, wherein tracing the curves comprises tracing the curves relative to the index curve over the first tensor product spline.

6. The method of any one of the preceding clauses, further comprising:
laying up a composite ply according to the flattened shape.

7. The method of any one of clauses 3-6, further comprising:

applying a composite ply having the flattened shape onto an index line of a tool corresponding to the index curve on the three-dimensional part surface; and

sweeping the composite ply to the tool.

8. The method of clause 7, wherein sweeping the composite ply to the tool comprises pressing the composite ply to the tool by sweeping outward from the index line.

9. The method of any one of clauses 3-8, wherein reparameterizing the curves onto the parametric domain representative of the two-dimensional space comprises constructing a partial reparameterization map of the first tensor product spline whose isoparametric curves are the curves on the first tensor product spline, and wherein mapping the curves to the second tensor product comprises constructing a flattening map by unraveling the traced curves along parallel straight lines indexed by the index curve.

10. The method of any one of the preceding clauses, wherein the desired fiber direction is one of 0 degrees, 15 degrees, 30 degrees, 45 degrees, 60 degrees, 75 degrees, or 90 degrees.

11. A method of performing a flattening to determine a two-dimensional ply shape, the method comprising:

setting an index curve on a parametric surface;
constructing a curve flattening of the index curve;
tracing curves on the parametric surface relative to the index curve to form traced curves;
constructing a reparameterization map of the parametric surface whose isoparametric curves are the traced curves on the parametric surface; and
constructing a flattening map by unraveling the traced curves along parallel straight lines indexed by the index curve.

12. The method of clause 11, wherein tracing curves on the parametric surface comprises isoparametric tracing.

13. The method of clause 12, wherein the isoparametric tracing comprises a best fit plane isoparametric flattening.

14. The method of clause 12 or 13, wherein the isoparametric tracing is performed according to

$$S_F(u,v) = c_F\big(t(u)\big) + \big(\propto (u,v) - s(u)\big)\begin{bmatrix}\cos\big(\theta(u)\big)\\\sin\big(\theta(u)\big)\end{bmatrix},$$

wherein

$S_F$ is the flattening map on a same parameter domain as parametric surface $S$, $c_F$ is the curve flattening of the index curve, T is a function from $u$ parameter of the surface that gives a location of an intersection of the isoparametric curve at $u$ with the index curve, as a parameter point in a parameter space of $c_F$, S is a function from the u parameter of the parametric surface that gives arc length along the isoparametric curve at u at its intersection with the index curve,
$\alpha$ is an arc length along the isoparametric curve at $u$ at its $v$ parameter location, and $\theta$ is an angle between the isoparametric curve at $u$ and the index curve; wherein $S(u,v)$ is a parameterized surface, the index curve is a curve $c(t) = (u(t),v(t))$ into the parameter domain of $S$. Physical space coordinates are x,y,z, and flat table-space coordinates are $x_F, y_F$.

15. The method of any one of clauses 11-14, wherein tracing curves on the parametric surface comprises geodesic tracing.

16. The method of clause 15, wherein the geodesic tracing is performed according to:

$$S_F(u_F, v_F) = c_F(u_F) + v_F\begin{bmatrix}\cos(\theta(u_F))\\\sin(\theta(u_F))\end{bmatrix},$$

wherein $S_F$ is the flattening map, $c_F$ is the curve flattening of the index curve, and $\theta$ is an angle between $c_F$ and a fixed direction in table space; and
wherein constructing the reparameterization map is performed according to:

$$\tau(u_F, v_F) = \gamma_{u_F}(v_F),$$

wherein
T is the reparameterization map from flat parameters $u_F$ and $v_F$ to surface parameters $u$ and $v$, $u_F$ is the index curve, $\gamma_{u_F}$ is a surface parameter space map of the geodesic traced on the surface from the index curve at $u_F$ so that the geodesic is $S \circ \gamma_{u_F}$, and $v_F$: arc-length parameter of $\gamma_{u_F}$.

17. The method of any one of clauses 11-16, wherein tracing curves on the parametric surface comprises offset tracing.

18. The method of clause 17, wherein the offset tracing is performed using

$$S_F(u_F, v_F) = \mu_{v_F}(u_F^* + u_F),$$

wherein $S_F$ is the flattening map, $\mu_{v_F}$ is the arc-length parameterized $v_F$-offset of the curve flattening of the index curve in table-space, and $u_F^*$ is a fixed parameter location along the $v_F$-offset; and
wherein constructing the reparameterization map comprises:

$$\tau(u_F, v_F) = \omega_{u_F}(u_F)$$

wherein $\omega_{u_F}$ is a surface parameter space map of the offset tracing on a surface of an index map by a distance of $v_F$, $u_F$ is the arc length parameter of the surface offset at $v_F$.

19. The method of any one of clauses 11-18, further comprising:
laying up a composite ply according to the flattening map.

20. The method of clause 19, further comprising:

applying the composite ply onto an index line of a tool corresponding to the index curve; and
sweeping the composite ply to the tool.

## Claims

1. A method (400) of performing a curve-wise flattening to determine a two-dimensional ply shape (242), the method comprising:

   tracing (402, 216) curves (212) on a first tensor product spline (208, 326) representing a three-dimensional part surface (204);
   reparameterizing (403, 225) the curves (212) onto a parametric domain representative of a two-dimensional space; and
   mapping (404, 226) the curves (212) to a second tensor product spline (228, 330) representing a flat table space (250) while maintaining lengths of the curves (212) between the first tensor product spline (208, 326) and the second tensor product spline (228, 330) in the curve-wise flattening to form a flattened shape (230), such that resulting table-space flattened curves (234) are parallel straight lines (236) in a desired fiber direction (238).

2. The method (400) of claim 1, wherein (410) tracing (216) the curves (212) comprises at least one of isoparametric tracing (218), best fit plane isoparametric tracing (220), geodesic tracing (222), or offset tracing (224).

3. The method (400) of claim 1 or 2, further comprising:

   drawing (406) an index curve (210) on the first tensor product spline (208, 326) prior to tracing the curves (212) on the first tensor product spline (208, 326), wherein the index curve (210) intersects each of the curves (212); and defining (414) index curve (210) flattening for the index curve (210) prior to mapping the curves (212) to the second tensor product spline (228, 330).

4. The method (400) of claim 3, wherein:

(408) the index curve (210) defines a location of a composite material that is fixed in a draping process of the composite material onto the three-dimensional part surface (204); and/or
(412) tracing the curves (212) comprises tracing the curves (212) relative to the index curve (210) over the first tensor product spline (208, 326).

5. The method (400) of any one of the preceding claims, preferably wherein:

the method further comprises laying up (416) a composite ply (244) according to the flattened shape (230); and/or
(426) the desired fiber direction (238) is one of 0 degrees, 15 degrees, 30 degrees, 45 degrees, 60 degrees, 75 degrees, or 90 degrees.

6. The method (400) of any one of claims 3-5, further comprising:

applying (418) a composite ply (244) having the flattened shape (230) onto an index line (254) of a tool (206) corresponding to the index curve (210) on the three-dimensional part surface (204); and
sweeping (420) the composite ply (244) to the tool (206), preferably wherein:
(422) sweeping the composite ply (244) to the tool (206) comprises pressing the composite ply (244) to the tool (206) by sweeping outward from the index line (254).

7. The method (400) of any one of claims 3-6, wherein reparameterizing (403, 225) the curves (212) onto the parametric domain representative of the two-dimensional space comprises constructing (424) a partial reparameterization map of the first tensor product spline (208, 326) whose isoparametric curves (212) are the curves (212) on the first tensor product spline (208, 326), and wherein mapping the curves (212) to the second tensor product comprises constructing a flattening map by unraveling the traced curves (212) along parallel straight lines (236) indexed by the index curve (210).

8. A method (500) of performing a flattening to determine a two-dimensional ply shape (242), the method comprising:

setting (502) an index curve (210) on a parametric surface;
constructing (504) a curve flattening (232) of the index curve (210);
tracing (506) curves (212) on the parametric surface relative to the index curve (210) to form traced curves (212);
constructing (508) a reparameterization map of the parametric surface whose isoparametric curves (212) are the traced curves (212) on the parametric surface; and
constructing (510) a flattening map by unraveling the traced curves (212) along parallel straight lines (236) indexed by the index curve (210).

9. The method (500) of claim 8, wherein (512) tracing curves (212) on the parametric surface comprises isoparametric tracing (218), preferably wherein:
(514) the isoparametric tracing (218) comprises a best fit plane isoparametric flattening.

10. The method (500) of claim 8 or 9, wherein the isoparametric tracing (218) is performed according to

$$S_F(u, v) = c_F\big(t(u)\big) + \big(\propto (u, v) - s(u)\big)\begin{bmatrix} \cos\big(\theta(u)\big) \\ \sin\big(\theta(u)\big) \end{bmatrix},$$

wherein

$S_F$ is the flattening map on a same parameter domain as parametric surface S, $c_F$ is the curve flattening (232) of the index curve (210), $\tau$ is a function from $u$ parameter of the surface that gives a location of an intersection of the isoparametric curve at u with the index curve (210), as a parameter point in a parameter space of $c_F$, S is a function from the u parameter of the parametric surface that gives arc length along the isoparametric curve at u at its intersection with the index curve (210),

$\alpha$ is an arc length along the isoparametric curve at $u$ at its $v$ parameter location, and $\theta$ is an angle between the isoparametric curve at $u$ and the index curve (210); wherein $S(u,v)$ is a parameterized surface, the index curve (210) is a curve $c(t) = (u(t),v(t))$ into the parameter domain of S. Physical space coordinates are x,y,z, and flat table-space coordinates are $x_F,y_F$.

11. The method (500) of any one of claims 8-10, wherein (516) tracing curves (212) on the parametric surface comprises geodesic tracing (222).

12. The method (500) of claim 11, wherein the geodesic tracing (222) is performed according to:

$$S_F(u_F, v_F) = c_F(u_F) + v_F \begin{bmatrix} \cos(\theta(u_F)) \\ \sin(\theta(u_F)) \end{bmatrix},$$

wherein $S_F$ is the flattening map, $c_F$ is the curve flattening (232) of the index curve (210), and $\theta$ is an angle between $c_F$ and a fixed direction in table space; and

wherein constructing the reparameterization map is performed according to:

$$\tau(u_F, v_F) = \gamma_{u_F}(v_F),$$

wherein

T is the reparameterization map from flat parameters $u_F$ and $v_F$ to surface parameters $u$ and $v$, $u_F$ is the index curve (210), $\gamma_{u_F}$ is a surface parameter space map of the geodesic traced on the surface from the index curve (210) at $u_F$ so that the geodesic is $S°\gamma_{u_F}$, and $v_F$: arc-length parameter of $\gamma_{u_F}$.

13. The method (500) of any one of claims 8-12, wherein (518) tracing curves (212) on the parametric surface comprises offset tracing (224).

14. The method (500) of claim 13, wherein the offset tracing (224) is performed using

$$S_F(u_F, v_F) = \mu_{v_F}(u_F^* + u_F),$$

wherein $S_F$ is the flattening map, $\mu_{v_F}$ is the arc-length parameterized $v_F$-offset of the curve flattening (232) of the index curve (210) in table-space, and $u_F^*$ is a fixed parameter location along the $v_F$-offset; and

wherein constructing the reparameterization map comprises:

$$\tau(u_F, v_F) = \omega_{u_F}(u_F)$$

wherein $\omega_{u_F}$ is a surface parameter space map of the offset tracing (224) on a surface of an index map by a distance of $v_F$, $u_F$ is the arc length parameter of the surface offset at $v_F$.

15. The method (500) of any one of claims 8-14, further comprising:
laying up (520) a composite ply (244) according to the flattening map, and preferably further comprising:
applying (522) the composite ply (244) onto an index line (254) of a tool (206) corresponding to the index curve (210); and
sweeping (524) the composite ply (244) to the tool (206).

FIG. 1

FIG. 2

FIG. 3

400

START

DRAWING AN INDEX CURVE ON THE FIRST TENSOR PRODUCT SPLINE PRIOR TO TRACING THE CURVES ON THE FIRST TENSOR PRODUCT SPLINE, WHEREIN THE INDEX CURVE INTERSECTS EACH OF THE PLURALITY OF CURVES — 406

WHEREIN THE INDEX CURVE DEFINES A LOCATION OF A COMPOSITE MATERIAL THAT IS FIXED IN A DRAPING PROCESS OF THE COMPOSITE MATERIAL ONTO THE THREE-DIMENSIONAL PART SURFACE — 408

402

TRACING CURVES ON A FIRST TENSOR PRODUCT SPLINE REPRESENTING A THREE-DIMENSIONAL PART SURFACE

WHEREIN TRACING THE CURVES COMPRISES AT LEAST ONE OF ISOPARAMETRIC TRACING, BEST FIT PLANE ISOPARAMETRIC TRACING, GEODESIC TRACING, OR OFFSET TRACING — 410

WHEREIN TRACING THE PLURALITY OF CURVES COMPRISES TRACING THE PLURALITY OF CURVES RELATIVE TO THE INDEX CURVE OVER THE FIRST TENSOR PRODUCT SPLINE — 412

DEFINING INDEX CURVE FLATTENING FOR THE INDEX CURVE PRIOR TO MAPPING THE CURVES TO THE SECOND TENSOR PRODUCT SPLINE — 414

403

REPARAMETERIZING THE CURVES INTO A PARAMETERIC DOMAIN REPRESENTATIVE OF A TWO-DIMENSIONAL SPACE

MAPPING THE CURVES TO A SECOND TENSOR PRODUCT SPLINE REPRESENTING A FLAT TABLE SPACE WHILE MAINTAINING LENGTHS OF THE CURVES BETWEEN THE FIRST TENSOR PRODUCT SPLINE AND THE SECOND TENSOR PRODUCT SPLINE IN THE CURVE-WISE FLATTENING TO FORM A FLATTENED SHAPE, SUCH THAT RESULTING TABLE-SPACE FLATTENED CURVES ARE PARALLEL STRAIGHT LINES IN A DESIRED FIBER DIRECTION

404

LAYING UP A COMPOSITE PLY ACCORDING TO THE FLATTENED SHAPE — 416

A

TO FIG. 4B

400

FROM FIG. 4A

A

APPLYING A COMPOSITE PLY HAVING THE FLATTENED SHAPE
ONTO AN INDEX LINE OF A TOOL CORRESPONDING TO THE
INDEX CURVE ON THE THREE DIMENSIONAL PART SURFACE — 418

SWEEPING THE COMPOSITE PLY TO THE TOOL — 420

WHEREIN SWEEPING THE COMPOSITE PLY TO THE TOOL
COMPRISES PRESSING THE COMPOSITE PLY TO THE
TOOL BY SWEEPING OUTWARD FROM THE INDEX LINE — 422

CONSTRUCTING A PARTIAL REPARAMETERIZATION MAP OF THE
FIRST TENSOR PRODUCT SPLINE WHOSE ISOPARAMETRIC CURVES
ARE THE PLURALITY OF CURVES ON THE FIRST TENSOR PRODUCT
SPLINE, AND WHEREIN MAPPING THE PLURALITY OF CURVES TO
THE SECOND TENSOR PRODUCT COMPRISES CONSTRUCTING A
FLATTENING MAP BY UNRAVELING THE TRACED CURVES ALONG
PARALLEL STRAIGHT LINES INDEXED BY THE INDEX CURVE — 424

WHEREIN THE DESIRED FIBER DIRECTION IS ONE OF
0 DEGREES, 15 DEGREES, 30 DEGREES, 45 DEGREES,
60 DEGREES, 75 DEGREES, OR 90 DEGREES — 426

END

FIG. 4B

500

START — 502

SETTING AN INDEX CURVE ON
A PARAMETRIC SURFACE

CONSTRUCTING A CURVE
FLATTENING OF THE INDEX CURVE — 504

TRACING CURVES ON THE PARAMETRIC
SURFACE RELATIVE TO THE INDEX
CURVE TO FORM TRACED CURVES

506

WHEREIN TRACING CURVES ON THE PARAMETRIC
SURFACE COMPRISES ISOPARAMETRIC TRACING — 512

WHEREIN THE ISOPARAMETRIC TRACING COMPRISES
A BEST FIT PLANE ISOPARAMETRIC FLATTENING — 514

WHEREIN TRACING CURVES ON THE PARAMETRIC
SURFACE COMPRISES GEODESIC TRACING — 516

WHEREIN TRACING CURVES ON THE PARAMETRIC
SURFACE COMPRISES OFFSET TRACING — 518

508

CONSTRUCTING A PARTIAL REPARAMETERIZATION
MAP OF THE PARAMETRIC SURFACE WHOSE
ISOPARAMETRIC CURVES ARE THE TRACED
CURVES ON THE PARAMETRIC SURFACE

CONSTRUCTING A FLATTENING MAP BY
UNRAVELING THE TRACED CURVES
ALONG PARALLEL STRAIGHT LINES
INDEXED BY THE INDEX CURVE

510

LAYING UP A COMPOSITE PLY
ACCORDING TO THE FLATTENING MAP — 520

APPLYING THE COMPOSITE PLY ONTO AN INDEX LINE
OF A TOOL CORRESPONDING TO THE INDEX CURVE — 522

SWEEPING THE COMPOSITE PLY TO THE TOOL — 524

END

FIG. 5

600

```
602 ─┐  ┌─────────────────────────────┐
       │   SPECIFICATION AND DESIGN   │
       └──────────────┬──────────────┘
                      ▼
604 ─┐  ┌─────────────────────────────┐
       │     MATERIAL PROCUREMENT     │
       └──────────────┬──────────────┘
                      ▼
606 ─┐  ┌─────────────────────────────┐
       │  COMPONENT AND SUBASSEMBLY   │
       │        MANUFACTURING         │
       └──────────────┬──────────────┘
                      ▼
608 ─┐  ┌─────────────────────────────┐
       │      SYSTEM INTEGRATION      │
       └──────────────┬──────────────┘
                      ▼
610 ─┐  ┌─────────────────────────────┐
       │   CERTIFICATION AND DELIVERY │
       └──────────────┬──────────────┘
                      ▼
612 ─┐  ┌─────────────────────────────┐
       │          IN SERVICE          │
       └──────────────┬──────────────┘
                      ▼
614 ─┐  ┌─────────────────────────────┐
       │   MAINTENANCE AND SERVICE    │
       └─────────────────────────────┘
```

FIG. 6

700

AIRCRAFT

| 702 ─ AIRFRAME | INTERIOR ─ 706 |

SYSTEMS

| 708 PROPULSION SYSTEM 712 | 710 ELECTRICAL SYSTEM 714 |
| HYDRAULIC SYSTEM | ENVIRONMENTAL SYSTEM |

─ 704

FIG. 7